# EUROPEAN PATENT SPECIFICATION

(11) **EP 3 936 561 B1**
(45) Date of publication and mention of the grant of the patent: **25.11.2026**
(21) Application number: 20778436.4
(22) Date of filing: 26.02.2020
(51) Int. Cl.: C08K 5/14, C08K 5/39, C08K 5/40, C08K 5/47, C08L 21/00, C08L 23/22, C09K 3/10

(54) **SEALANT RUBBER COMPOSITION FOR INNER TIRE SURFACE AND SEALANT-COATED TIRE**
DICHTGUMMIZUSAMMENSETZUNG FÜR INNERE REIFENFLÄCHE UND MIT DICHTMITTEL BESCHICHTETER REIFEN
COMPOSITION DE CAOUTCHOUC D'ÉTANCHÉITÉ POUR SURFACE DE PNEU INTERNE ET PNEU REVÊTU DE MATÉRIAU D'ÉTANCHÉITÉ

(30) Priority: 28.03.2019 JP 2019063796
(43) Date of publication of application: 12.01.2022
(73) Proprietor: Sumitomo Rubber Industries, Ltd., Kobe-shi, Hyogo 651-0072 (JP)
(72) Inventor: MATSUMOTO, Norihiro, Kobe-shi, Hyogo 651-0072 (JP)
(74) Representative: Manitz Finsterwald Patent- und Rechtsanwaltspartnerschaft mbB
(86) International application number: PCT/JP2020/007818
(87) International publication number: WO 2020/195492

(56) References cited:
- EP-A1- 1 964 864
- EP-A1- 3 263 359
- EP-A1- 3 315 548
- WO-A1-2016/060246
- WO-A1-2016/060246
- WO-A1-2020/246505
- JP-A- 2016 108 540
- JP-A- 2016 108 540
- JP-A- S5 915 442
- JP-A- S60 115 647

## Description

### TECHNICAL FIELD

The present disclosure relates to tire inner surface sealant rubber compositions and self-sealing tires.

### BACKGROUND ART

Self-sealing tires with sealants applied to their inner peripheries are known as puncture resistant pneumatic tires (hereinafter, pneumatic tires are also referred to simply as tires). The sealants automatically seal puncture holes formed in the self-sealing tires.

There are several known methods for producing self-sealing tires, one of which involves adding an organic solvent to a sealant to reduce the viscosity enough to be easy to handle, attaching the diluted sealant to the tire inner surface, and removing the organic solvent from the attached diluted sealant. Another method involves mixing a base component prepared in a batch kneading machine with a curing agent using a static or dynamic mixer to prepare a sealant and attaching the sealant to the inner periphery of a tire (see, for example, Patent Literature 1). Patent Literature 2 to 6 disclose sealing compositions for tires comprising a butyl rubber, p-benzoquinone dioxime and benzoyl peroxide. A puncture-sealing composition comprising a rubber component, p-benzoquinone dioxime and a peroxide is known from Patent Literature 7.

In recent years, for example, self-sealing tires have been in practical use which include a sealant prepared by oxidative crosslinking of a butyl rubber and a liquid rubber. Such self-sealing tires, however, may suffer deterioration of sealing performance during storage in a warehouse or during tire service. Therefore, an improvement is desired.

### CITATION LIST

### PATENT LITERATURE

Patent Literature 1: JP 2010-528131 T
Patent Literature 2: EP 3 315 548 A1
Patent Literature 3: EP 3 263 359 A1
Patent Literature 4: WO 2016/060246 A1
Patent Literature 5: JP 2016-108540 A
Patent Literature 6: JP S59-15442 A
Patent Literature 7: JP S60-115647 A

### SUMMARY OF DISCLOSURE

### TECHNICAL PROBLEM

The present disclosure aims to solve the problem and provide a tire inner surface sealant rubber composition that makes it possible to reduce changes in physical properties and sealing performance, as well as a self-sealing tire including the rubber composition.

### SOLUTION TO PROBLEM

The present disclosure relates to a tire inner surface sealant rubber composition, containing:
at least one rubber component;
at least one vulcanization accelerator selected from the group consisting of thiazoles, thiurams, and dithiocarbamines; and
at least one peroxide; and
at least one crosslinking agent,
the rubber composition containing, per 100 parts by mass of the at least one rubber component, 0.5 to 10.0 1parts by mass of the at least one vulcanization accelerator and 0.5 to 10.0 parts by mass of the at least one peroxide, and 0.5 to 12.0 parts by mass of the at least one crosslinking agent, wherein the at least one crosslinking agent is a quinone dioxime compound, and the rubber component comprises at least one butyl-based rubber.

Preferably, the peroxide is at least one benzoyl peroxide.

The present disclosure also relates to a self-sealing tire, including a sealant layer including the rubber composition provided on an inner periphery of the tire.

### ADVANTAGEOUS EFFECTS OF DISCLOSURE

A tire inner surface sealant rubber composition of the present disclosure contains at least one rubber component, at least one vulcanization accelerator selected from the group consisting of thiazoles, thiurams, and dithiocarbamines, at least one peroxide, and at least one crosslinking agent. The rubber composition contains, per 100 parts by mass of the at least one rubber component, 0.5 to 10.0 parts by mass of the at least one vulcanization accelerator, 0.5 to 10.0 parts by mass of the at least one peroxide, and 0.5 to 12.0 parts by mass of the at least one crosslinking agent, wherein the at least one crosslinking agent is a quinone dioxime compound, and the rubber component comprises at least one butyl-based rubber. With such a rubber composition, it is possible to provide a self-sealing tire with reduced changes in physical properties and sealing performance.

### DESCRIPTION OF EMBODIMENTS

### (Tire inner surface sealant rubber composition)

The tire inner surface sealant rubber composition of the present disclosure contains at least one rubber component, at least one vulcanization accelerator selected from the group consisting of thiazoles, thiurams, and dithiocarbamines, at least one peroxide, and at least one crosslinking agent in predetermined amounts, wherein the at least one crosslinking agent is a quinone dioxime compound, and the rubber component comprises at least one butyl-based rubber. This makes it possible to reduce the changes in physical properties and sealing performance of the sealant rubber composition.

The reason for this advantageous effect is not clear, but is believed to be due to the following mechanism. Conventional sealants contain a large amount of peroxides and crosslinking agents that are left unreacted during the production process. These residual peroxides and crosslinking agents may react during storage in a warehouse or during tire service, thus causing a change in physical properties and deterioration of sealing performance. In contrast, it is believed that in the sealant according to the present disclosure which contains components such as a rubber component and a peroxide and further contains a specific vulcanization accelerator such as a thiazole, there is a reduced amount of crosslinking agents and peroxides that are left unreacted during the production, and therefore it is possible to reduce the changes in physical properties and sealing performance of the sealant.

### (Rubber component)

Suitable examples of the rubber component(s) in the sealant rubber composition include diene rubbers, including, for example, natural rubbers (NR), isoprene-based rubbers such as polyisoprene rubbers (IR), polybutadiene rubbers (BR), styrene-butadiene rubbers (SBR), styrene-isoprene-butadiene rubbers (SIBR), ethylene-propylene-diene rubbers (EPDM), chloroprene rubbers (CR), acrylonitrile-butadiene rubbers (NBR), and butyl-based rubbers such as butyl rubbers (IIR). From the standpoint of properties such as sealing performance, butyl-based rubbers are preferred among these.

Examples of the butyl-based rubbers include, in addition to butyl rubbers (IIR), halogenated butyl rubbers (X-IIR) such as brominated butyl rubbers (Br-IIR) and chlorinated butyl rubbers (Cl-IIR). From the standpoint of properties such as fluidity, butyl rubbers and/or halogenated butyl rubbers are preferred among these.

From the standpoint of properties such as fluidity, the amount of the butyl-based rubbers based on 100% by mass of the rubber components in the sealant rubber composition is preferably 90% by mass or more, more preferably 95% by mass or more, particularly preferably 100% by mass.

The Mooney viscosity ML1+8 at 125°C of the butyl-based rubbers is preferably 40 or higher, more preferably 45 or higher, still more preferably 46 or higher, particularly preferably 48 or higher, most preferably 51 or higher, but is preferably 80 or lower, more preferably 70 or lower, still more preferably 60 or lower. With a Mooney viscosity within the range indicated above, good properties such as sealing performance tend to be obtained.

The Mooney viscosity ML1+8 at 125°C is determined according to JIS K-6300-1:2001 at a test temperature of 125°C using an L type rotor with a preheating time of one minute and a rotor rotation time of eight minutes.

### (Vulcanization accelerator)

The sealant rubber composition contains at least one rubber component and at least one vulcanization accelerator selected from the group consisting of thiazoles, thiurams, and dithiocarbamines. The addition of such a specific vulcanization accelerator permits reduction of the amount of peroxides and crosslinking agents, thus making it possible to reduce changes in physical properties and sealing performance.

The amount of the vulcanization accelerators (the combined amount of thiazoles, thiurams, and dithiocarbamines) per 100 parts by mass of the rubber components is 0.5 parts by mass or more, preferably 1.5 parts by mass or more, more preferably 2.0 parts by mass or more. With an amount not less than the lower limit, the changes in physical properties and sealing performance tend to be reduced. The upper limit is 10.0 parts by mass or less, preferably 8.0 parts by mass or less, more preferably 7.0 parts by mass or less, still more preferably 5.0 parts by mass or less. With an amount not more than the upper limit, good properties such as crosslinkability tend to be obtained.

Examples of the thiazoles include 2-mercaptobenzothiazole, di-2-benzothiazolyl disulfide, a 2-mercaptobenzothiazole zinc salt, a 2-mercaptobenzothiazole cyclohexylamine salt, 2-(N,N-diethylthiocarbamoylthio)benzothiazole, 2-(4'-morpholinodithio)benzothiazole, 4-methyl-2-mercaptobenzothiazole, di-(4-methyl-2-benzothiazolyl)disulfide, 5-chloro-2-mercaptobenzothiazole, sodium 2-mercaptobenzothiazole, 2-mercapto-6-nitrobenzothiazole, 2-mercapto-naphtho[1,2-d]thiazole, 2-mercapto-5-methoxybenzothiazole, and 6-amino-2-mercaptobenzothiazole. Preferred among these are 2-mercaptobenzothiazole, di-2-benzothiazolyl disulfide, a 2-mercaptobenzothiazole zinc salt, and sodium 2-mercaptobenzothiazole.

The amount of the thiazole vulcanization accelerators per 100 parts by mass of the rubber components is 0.5 parts by mass or more, preferably 1.5 parts by mass or more, more preferably 2.0 parts by mass or more. With an amount not less than the lower limit, the changes in physical properties and sealing performance tend to be reduced. The upper limit is 10.0 parts by mass or less, preferably 8.0 parts by mass or less, more preferably 7.0 parts by mass or less, still more preferably 5.0 parts by mass or less. With an amount not more than the upper limit, good properties such as crosslinkability tend to be obtained.

Examples of the thiurams include tetramethylthiuram disulfide, tetraethylthiuram disulfide, tetrapropylthiuram disulfide, tetraisopropylthiuram disulfide, tetrabutylthiuram disulfide, tetrapentylthiuram disulfide, tetrahexylthiuram disulfide, tetraheptylthiuram disulfide, tetraoctylthiuram disulfide, tetranonylthiuram disulfide, tetradecylthiuram disulfide, tetradodecylthiuram disulfide, tetrastearylthiuram disulfide, tetrabenzylthiuram disulfide, tetrakis(2-ethylhexyl)thiuram disulfide, tetramethylthiuram monosulfide, tetraethylthiuram monosulfide, tetrapropylthiuram monosulfide, tetraisopropylthiuram monosulfide, tetrabutylthiuram monosulfide, tetrapentylthiuram monosulfide, tetrahexylthiuram monosulfide, tetraheptylthiuram monosulfide, tetraoctylthiuram monosulfide, tetranonylthiuram monosulfide, tetradecylthiuram monosulfide, tetradodecylthiuram monosulfide, tetrastearylthiuram monosulfide, tetrabenzylthiuram monosulfide, and dipentamethylenethiuram tetrasulfide. Preferred among these are tetramethylthiuram disulfide, tetraethylthiuram disulfide, tetrabutylthiuram disulfide, dipentamethylenethiuram tetrasulfide, tetramethylthiuram monosulfide, and tetrabenzylthiuram disulfide.

The amount of the thiuram vulcanization accelerators per 100 parts by mass of the rubber components is 0.5 parts by mass or more, preferably 1.5 parts by mass or more, more preferably 2.0 parts by mass or more. With an amount not less than the lower limit, the changes in physical properties and sealing performance tend to be reduced. The upper limit is 10.0 parts by mass or less, preferably 8.0 parts by mass or less, more preferably 7.0 parts by mass or less, still more preferably 5.0 parts by mass or less. With an amount not more than the upper limit, good properties such as crosslinkability tend to be obtained.

Examples of the dithiocarbamates include zinc dimethyldithiocarbamate, zinc diethyldithiocarbamate, zinc dipropyldithiocarbamate, zinc diisopropyldithiocarbamate, zinc dibutyldithiocarbamate, zinc dipentyldithiocarbamate, zinc dihexyldithiocarbamate, zinc diheptyldithiocarbamate, zinc dioctyldithiocarbamate, zinc di(2-ethylhexyl)dithiocarbamate, zinc didecyldithiocarbamate, zinc didodecyldithiocarbamate, zinc N-pentamethylenedithiocarbamate, zinc N-ethyl-N-phenyldithiocarbamate, zinc dibenzyldithiocarbamate, copper dimethyldithiocarbamate, copper diethyldithiocarbamate, copper dipropyldithiocarbamate, copper diisopropyldithiocarbamate, copper dibutyldithiocarbamate, copper dipentyldithiocarbamate, copper dihexyldithiocarbamate, copper diheptyldithiocarbamate, copper dioctyldithiocarbamate, copper di(2-ethylhexyl)dithiocarbamate, copper didecyldithiocarbamate, copper didodecyldithiocarbamate, copper N-pentamethylenedithiocarbamate, copper dibenzyldithiocarbamate, sodium dimethyldithiocarbamate, sodium diethyldithiocarbamate, sodium dipropyldithiocarbamate, sodium diisopropyldithiocarbamate, sodium dibutyldithiocarbamate, sodium dipentyldithiocarbamate, sodium dihexyldithiocarbamate, sodium diheptyldithiocarbamate, sodium dioctyldithiocarbamate, sodium di(2-ethylhexyl)dithiocarbamate, sodium didecyldithiocarbamate, sodium didodecyldithiocarbamate, sodium N-pentamethylenedithiocarbamate, sodium dibenzyldithiocarbamate, ferric dimethyldithiocarbamate, ferric diethyldithiocarbamate, ferric dipropyldithiocarbamate, ferric diisopropyldithiocarbamate, ferric dibutyldithiocarbamate, ferric dipentyldithiocarbamate, ferric dihexyldithiocarbamate, ferric diheptyldithiocarbamate, ferric dioctyldithiocarbamate, ferric di(2-ethylhexyl)dithiocarbamate, ferric didecyldithiocarbamate, ferric didodecyldithiocarbamate, ferric N-pentamethylenedithiocarbamate, ferric dibenzyldithiocarbamate, and piperidinium pentamethylenedithiocarbamate. Preferred among these are zinc dimethyldithiocarbamate, zinc diethyldithiocarbamate, zinc dibutyldithiocarbamate, zinc N-ethyl-N-phenyldithiocarbamate, sodium dimethyldithiocarbamate, sodium diethyldithiocarbamate, sodium dibutyldithiocarbamate, and piperidinium pentamethylenedithiocarbamate.

The amount of the dithiocarbamate vulcanization accelerators per 100 parts by mass of the rubber components is 0.5 parts by mass or more, preferably 1.5 parts by mass or more, more preferably 2.0 parts by mass or more. With an amount not less than the lower limit, the changes in physical properties and sealing performance tend to be reduced. The upper limit is 10.0 parts by mass or less, preferably 8.0 parts by mass or less, more preferably 7.0 parts by mass or less, still more preferably 5.0 parts by mass or less. With an amount not more than the upper limit, good properties such as crosslinkability tend to be obtained.

### (Peroxide)

The amount of the peroxides per 100 parts by mass of the rubber components is 0.5 parts by mass or more, preferably 0.9 parts by mass or more, more preferably 1.5 parts by mass or more, still more preferably 2.5 parts by mass or more, particularly preferably 3.0 parts by mass or more. With an amount not less than the lower limit, good properties such as crosslinkability tend to be obtained. The upper limit is 10.0 parts by mass or less, preferably 8.0 parts by mass or less, more preferably 6.0 parts by mass or less, still more preferably 5.0 parts by mass or less, particularly preferably 2.0 parts by mass or less. With an amount not more than the upper limit, the changes in physical properties and sealing performance tend to be reduced.

Any peroxide can be used, including conventional organic peroxides. When a butyl-based rubber or a liquid polymer is used in an organic peroxide crosslinking system, adhesion, sealing performance, fluidity, and processability can be improved.

Examples of the organic peroxides include various peroxides including: acyl peroxides such as benzoyl peroxides; peroxyesters such as 1-butyl peroxyacetate, t-butyl peroxybenzoate, and t-butyl peroxyphthalate; ketone peroxides such as methyl ethyl ketone peroxide; alkyl peroxides such as di-t-butyl peroxybenzoate, 1,3-bis(1-butylperoxyisopropyl)benzene, dicumyl peroxide, and t-butyl cumyl peroxide; hydroperoxides such as t-butyl hydroperoxide; and peroxycarbonates such as tert-butylperoxy isopropyl carbonate and bis-4-tert-butylcyclohexyl peroxydicarbonate. From the standpoint of adhesion and fluidity, acyl peroxides and alkyl peroxides are preferred among these, with benzoyl peroxides or alkyl peroxides being more preferred.

Examples of benzoyl peroxides suitable for reducing changes in physical properties and sealing performance include compounds represented by the following formula (I): 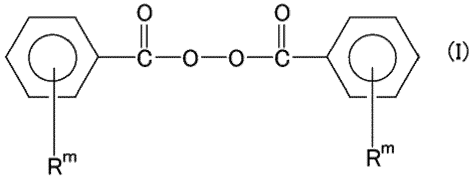 wherein each R may be the same or different and represents a hydrogen atom, a substituted or unsubstituted monovalent hydrocarbon group, or a halogen atom, and each m may be the same or different and represents an integer of 1 to 5.

From the standpoint of reducing changes in physical properties and sealing performance, R (unsubstituted or substituted monovalent hydrocarbon group) is preferably a C1-C12 monovalent hydrocarbon group, more preferably a C1-C6 monovalent hydrocarbon group, still more preferably a C1-C3 monovalent hydrocarbon group. The unsubstituted or substituted monovalent hydrocarbon group may be linear, branched, or cyclic, preferably linear or branched. The unsubstituted or substituted monovalent hydrocarbon group may be a saturated or unsaturated hydrocarbon group, preferably a saturated hydrocarbon group.

Specific examples of R (unsubstituted or substituted monovalent hydrocarbon group) include alkyl groups such as methyl, ethyl, propyl, butyl, hexyl, and octyl groups; alkenyl groups such as vinyl, allyl, propenyl, butenyl, and hexenyl groups; aryl groups such as phenyl and tolyl groups; aralkyl groups such as benzyl and phenylethyl groups; and halogen-substituted hydrocarbon groups such as a 3,3,3-trifluoropropyl group. Among these, alkyl groups are preferred, C1-C6 alkyl groups are more preferred, C1-C3 alkyl groups are still more preferred, and a methyl group is particularly preferred.

Examples of R (halogen atom) include a chlorine atom and a bromine atom. Preferred among these is a chlorine atom. The superscript m is preferably an integer of 1 to 3.

Specific examples of the compounds of formula (I) include benzoyl peroxide (dibenzoyl peroxide), o-methylbenzoyl peroxide, m-methylbenzoyl peroxide, bis(2,3-dimethylbenzoyl)peroxide (2,3-dimethylbenzoyl peroxide), bis(2,4-dimethylbenzoyl)peroxide (2,4-dimethylbenzoyl peroxide), bis(2,5-dimethylbenzoyl)peroxide (2,5-dimethylbenzoyl peroxide), bis(2,6-dimethylbenzoyl)peroxide (2,6-dimethylbenzoyl peroxide), bis(2,3,4-trimethylbenzoyl)peroxide (2,3,4-trimethylbenzoyl peroxide), bis(2,3,5-trimethylbenzoyl)peroxide (2,3,5-trimethylbenzoyl peroxide), bis(para-chlorobenzoyl)peroxide (p-chlorobenzoyl peroxide), bis(orthochlorobenzoyl)peroxide (o-chlorobenzoyl peroxide), and bis(2,4-dichlorobenzoyl)peroxide (2,4-dichlorobenzoyl peroxide). Preferred among these is benzoyl peroxide (dibenzoyl peroxide).

The amount of the benzoyl peroxides per 100 parts by mass of the rubber components is 0.5 parts by mass or more, preferably 0.9 parts by mass or more, more preferably 1.5 parts by mass or more, still more preferably 2.5 parts by mass or more, particularly preferably 3.0 parts by mass or more. With an amount not less than the lower limit, good properties such as crosslinkability tend to be obtained. The upper limit is 10.0 parts by mass or less, preferably 8.0 parts by mass or less, more preferably 6.0 parts by mass or less, still more preferably 5.0 parts by mass or less, particularly preferably 2.0 parts by mass or less. With an amount not more than the upper limit, the changes in physical properties and sealing performance tend to be reduced. The amount of the alkyl peroxides, if used, is suitably the same as described above.

### (Crosslinking agent)

The sealant rubber composition contains one or more crosslinking agents. At least one crosslinking agent is a quinone dioxime compound. Quinone dioxime compounds (quinoid compounds) are suitable crosslinking agents from the standpoint of adhesion, sealing performance, fluidity, and processability.

Examples of the quinone dioxime compounds include p-benzoquinone dioxime, p-quinone dioxime, p-quinone dioxime diacetate, p-quinone dioxime dicaproate, p-quinone dioxime dilaurate, p-quinone dioxime distearate, p-quinone dioxime dicrotonate, p-quinone dioxime dinaphthenate, p-quinone dioxime succinate, p-quinone dioxime adipate, p-quinone dioxime difuroate, p-quinone dioxime dibenzoate, p-quinone dioxime di(o-chlorobenzoate), p-quinone dioxime di(p-chlorobenzoate), p-quinone dioxime di(p-nitrobenzoate), p-quinone dioxime di(m-nitrobenzoate), p-quinone dioxime di(3,5-dinitrobenzoate), p-quinone dioxime di(p-methoxybenzoate), p-quinone dioxime di(n-amyloxybenzoate), and p-quinone dioxime di (m-bromobenzoate). From the standpoint of adhesion, sealing performance, and fluidity, p-benzoquinone dioxime is preferred among these.

From the standpoint of properties such as crosslinkability, the amount of the crosslinking agents such as quinone dioxime compounds per 100 parts by mass of the rubber components is 0.5 parts by mass or more, more preferably 1.0 part by mass or more, still more preferably 2.0 parts by mass or more, particularly preferably 3.0 parts by mass or more. From the standpoint of reducing changes in physical properties and sealing performance, the upper limit is 12.0 parts by mass or less, more preferably 10.0 parts by mass or less, still more preferably 7.0 parts by mass or less, particularly preferably 5.0 parts by mass or less, most preferably 2.5 parts by mass or less.

The amount of the quinone dioxime compounds falls within the same range as described above.

### (Liquid polymer)

The sealant rubber composition preferably contains one or more liquid polymers (polymers that are in liquid form at room temperature (25°C)). Examples of the liquid polymers include liquid polybutenes, liquid polyisobutenes, liquid polyisoprenes, liquid polybutadienes, liquid poly-α-olefins, liquid isobutylenes, liquid ethylene-α-olefin copolymers, liquid ethylene-propylene copolymers, and liquid ethylene-butylene copolymers. From the standpoint of imparting adhesion and from other standpoints, liquid polybutenes are preferred among these. Examples of the liquid polybutenes include copolymers having a long-chain hydrocarbon molecular structure which is based on isobutene and further reacted with normal butene. Hydrogenated liquid polybutenes can also be used.

From the standpoint of imparting adhesion and from other standpoints, the amount of the liquid polymers per 100 parts by mass of the rubber components is preferably 100 parts by mass or more, more preferably 110 parts by mass or more, still more preferably 200 parts by mass or more, particularly preferably 210 parts by mass or more. The upper limit is not limited but is preferably 500 parts by mass or less, more preferably 450 parts by mass or less, still more preferably 400 parts by mass or less, particularly preferably 350 parts by mass or less, most preferably 300 parts by mass or less. Moreover, the upper limit may be 250 parts by mass or less. The amount of the liquid polybutenes suitably falls within the same range as described above.

From the standpoint of fluidity of the sealant, the kinematic viscosity at 100°C of the liquid polymers such as liquid polybutenes is preferably 550 mm²/s or higher, more preferably 570 mm²/s or higher, still more preferably 590 mm²/s or higher, particularly preferably 618 mm²/s or higher. From the standpoint of extrudability, the kinematic viscosity at 100°C is preferably 6000 mm²/s or lower, more preferably 5000 mm²/s or lower, still more preferably 4500 mm²/s or lower.

From the standpoint of fluidity of the sealant, the kinematic viscosity at 40°C of the liquid polymers such as liquid polybutenes is preferably 20000 mm²/s or higher, more preferably 23000 mm²/s or higher, still more preferably 26000 mm²/s or higher. From the standpoint of sealing performance, the kinematic viscosity at 40°C is preferably 200000 mm²/s or lower, more preferably 180000 mm²/s or lower.

The kinematic viscosities are measured at 100°C and 40°C, respectively, according to JIS K 2283-2000.

### (Other components)

Fillers such as carbon black, silica, calcium carbonate, calcium silicate, magnesium oxide, aluminum oxide, barium sulfate, talc, and mica, and plasticizers such as aromatic process oils, naphthenic process oils, and paraffinic process oils may be added to the sealant rubber composition.

The amount of the fillers per 100 parts by mass of the rubber components is preferably 5 parts by mass or more, more preferably 10 parts by mass or more, still more preferably 15 parts by mass or more, particularly preferably 30 parts by mass or more, most preferably 40 parts by mass or more. The upper limit is not limited but is preferably 100 parts by mass or less, more preferably 80 parts by mass or less, still more preferably 60 parts by mass or less, particularly preferably 50 parts by mass or less. With an amount within the range indicated above, the changes in physical properties and sealing performance tend to be reduced.

From the standpoint of preventing deterioration and from other standpoints, carbon black is preferred among the fillers. The amount of the carbon black per 100 parts by mass of the rubber components is preferably 5 parts by mass or more, more preferably 15 parts by mass or more, still more preferably 20 parts by mass or more, particularly preferably 35 parts by mass or more, most preferably 40 parts by mass or more. The upper limit is not limited but is preferably 100 parts by mass or less, more preferably 80 parts by mass or less, still more preferably 60 parts by mass or less, particularly preferably 50 parts by mass or less. With an amount within the range indicated above, not only an effect of preventing deterioration but also reduced changes in physical properties and sealing performance tend to be obtained.

The statistical thickness surface area (STSA) of the carbon black is preferably 80 m²/g or more, more preferably 90 m²/g or more, still more preferably 95 m²/g or more, particularly preferably 100 m²/g or more, most preferably 104 m²/g or more. The upper limit is preferably 150 m²/g or less, more preferably 130 m²/g or less, still more preferably 120 m²/g or less. With a STSA within the range indicated above, not only an effect of preventing deterioration due to ultraviolet light but also reduced changes in physical properties and sealing performance can be obtained.

The STSA of the carbon black is measured according to JIS K 6217-7:2013.

The oil absorption number of compressed sample (COAN) of the carbon black is preferably 50 ml/100 g or more, more preferably 70 ml/100 g or more, still more preferably 85 ml/100 g or more, particularly preferably 95 ml/100 g or more, most preferably 98 ml/100 g or more. The COAN is also preferably 150 ml/100 g or less, more preferably 130 ml/100 g or less, still more preferably 110 ml/100 g or less.

Herein, the COAN of the carbon black is determined by the measurement method according to JIS K 6217-4. The oil used is dibutyl phthalate.

The amount of the plasticizers, if present, per 100 parts by mass of the rubber components is preferably 1 part by mass or more, more preferably 5 parts by mass or more. With an amount not less than the lower limit, adhesion to the tire tends to be enhanced, resulting in sufficient sealing performance. The amount is preferably 40 parts by mass or less, more preferably 20 parts by mass or less. With an amount not more than the upper limit, slippage within the kneading machine tends to be prevented, resulting in enhanced kneadability of the sealant. Herein, the plasticizers exclude the above-described liquid polymers, and the amount of the plasticizers is the amount of oils excluding the liquid polymers.

The tire inner surface sealant rubber composition can be prepared, for example, by mixing the above-described rubber component such as butyl-based rubber, vulcanization accelerator, peroxide, crosslinking agent, liquid polymer, and other components (e.g., filler such as carbon black and plasticizer) .

### (Self-sealing tire)

A self-sealing tire (a pneumatic tire provided with a sealant layer) can be produced, for example, by preparing a sealant rubber composition by mixing the components of the sealant, and then attaching the composition to an inner periphery of a tire by application or other means to form a sealant layer. The self-sealing tire preferably includes the sealant layer provided radially inside the innerliner.

The materials of the sealant may be mixed using a known continuous kneading machine, for example. For example, they may be mixed using a co-rotating or counter-rotating multi-screw kneading extruder such as a twin screw kneading extruder.

In the application of the sealant rubber composition to an inner periphery of a tire, the composition may be applied at least to a tire inner periphery that corresponds to the tread portion, and preferably at least to a tire inner periphery that corresponds to the breaker. The term "tire inner periphery that corresponds to the tread portion" refers to an inner periphery of a tire that is located radially inside the tread portion of the tire which contacts the road surface, and the term "tire inner periphery that corresponds to the breaker" refers to an inner periphery of a tire that is located radially inside the breaker of the tire.

The self-sealing tire is applicable to tires in which a sealant layer is provided inside the tire or in the tire cavity, as well as those with a sealant layer and a sound-absorbing component such as sponge inside the tire or in the tire cavity. Moreover, the self-sealing tire may be used as any tire, including: tires for passenger vehicles; tires for trucks and buses; tires for two-wheeled vehicles; high-performance tires; winter tires such as studless winter tires; and run-flat tires provided with a side reinforcing layer.

### EXAMPLES

The present disclosure is specifically described with reference to, but not limited to, examples below.

The chemicals used in the examples are listed below.
Non-halogenated butyl rubber: butyl 268 (Exxon Mobil Corporation, Mooney viscosity ML1+8 at 125°C: 51, halogen content: 0% by mass)
Brominated butyl rubber: bromobutyl 2255 (Exxon Mobil Corporation, Mooney viscosity ML1+8 at 125°C: 46, halogen content: 2.0% by mass)
Carbon black: Vulcan 6 (Cabot Corporation, STSA: 104 m²/g, COAN: 98 ml/100 g)
Liquid polybutene: Nisseki Polybutene HV300 (JXTG Nippon Oil & Energy Corporation, kinematic viscosity at 40°C: 26000 mm²/s, kinematic viscosity at 100°C: 590 mm²/s, number average molecular weight: 1400)
Peroxide 1: NYPER NS (NOF Corporation, dibenzoyl peroxide (dilution, dibenzoyl peroxide: 40% by mass, dibutyl phthalate: 48% by mass))
Peroxide 2: PEROYL TCP (NOF Corporation, bis-4-tert-butylcyclohexyl peroxydicarbonate)
Peroxide 3: PERCUMYL D (Ouchi Shinko Chemical Industrial Co., Ltd., dicumyl peroxide)
Crosslinking agent: VULNOC GM (Ouchi Shinko Chemical Industrial Co., Ltd., p-benzoquinone dioxime)
Vulcanization accelerator 1: ACCEL DM (Kawaguchi Chemical Industry Co., Ltd., di-2-benzothiazolyl disulfide (thiazole))
Vulcanization accelerator 2: NOCCELER M-P (Ouchi Shinko Chemical Industrial Co., Ltd., 2-mercaptobenzothiazole (thiazole))
Vulcanization accelerator 3: NOCCELER TT-P (Ouchi Shinko Chemical Industrial Co., Ltd., tetramethylthiuram disulfide (thiuram))
Vulcanization accelerator 4: NOCCELER TS (Ouchi Shinko Chemical Industrial Co., Ltd., tetramethylthiuram monosulfide (thiuram))
Vulcanization accelerator 5: NOCCELER PZ (Ouchi Shinko Chemical Industrial Co., Ltd., zinc dimethyldithiocarbamate (dithiocarbamate))
Vulcanization accelerator 6: NOCCELER TP (Ouchi Shinko Chemical Industrial Co., Ltd., sodium dibutyldithiocarbamate (dithiocarbamate))

### <Preparation of tire inner surface sealant rubber composition>

The components were compounded according to each formulation shown in the tables and then kneaded and processed in a 3L kneader and an open roll mill to prepare a sealant rubber composition.

### <Preparation of crosslinked sealant>

Each of the sealant rubber compositions prepared as above was subjected to a crosslinking curing reaction using preheat from the kneading process to prepare a crosslinked sealant.

The viscosity of the crosslinked sealants prepared as above was evaluated in the following way. It should be noted that Comparative Examples 1-1, 2-1, and 1-1 are used as standards of comparison in Tables 1, 2, and 3, respectively.

### (Viscosity)

The viscosity of the crosslinked sealants was measured using a rheometer available from Anton Parr. The crosslinked sealants were measured for initial viscosity upon preparation (viscosity immediately after preparation) and viscosity after storage at 80°C for seven days (viscosity after aging). The initial viscosity and viscosity after aging of each formulation are expressed as an index, with the initial viscosity of the standard comparative example set equal to 100. A higher index indicates a higher viscosity. Practical sealing performance can be ensured with an initial viscosity (index) within the range of 60 to 130. Moreover, a formulation with a viscosity closer to its initial viscosity (i.e., a ratio of the viscosity after aging to the initial viscosity closer to 1.0) indicates that it exhibits less changes in physical properties and sealing performance.

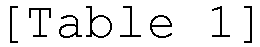

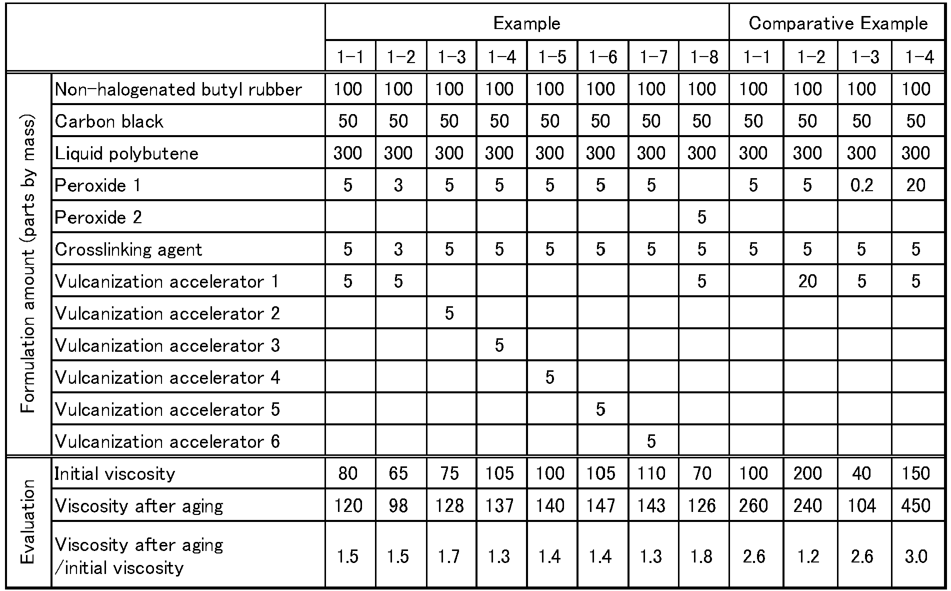

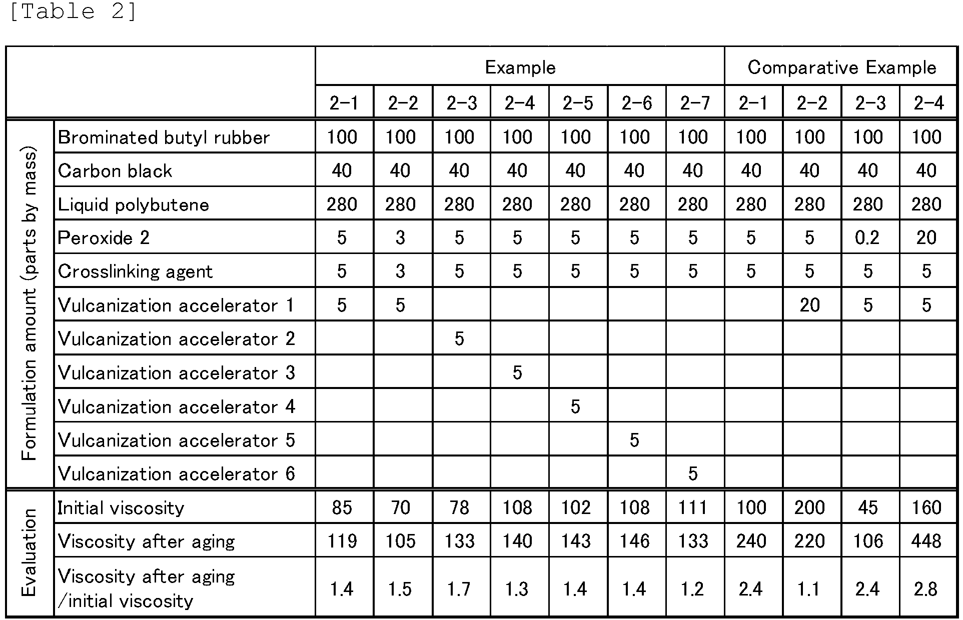

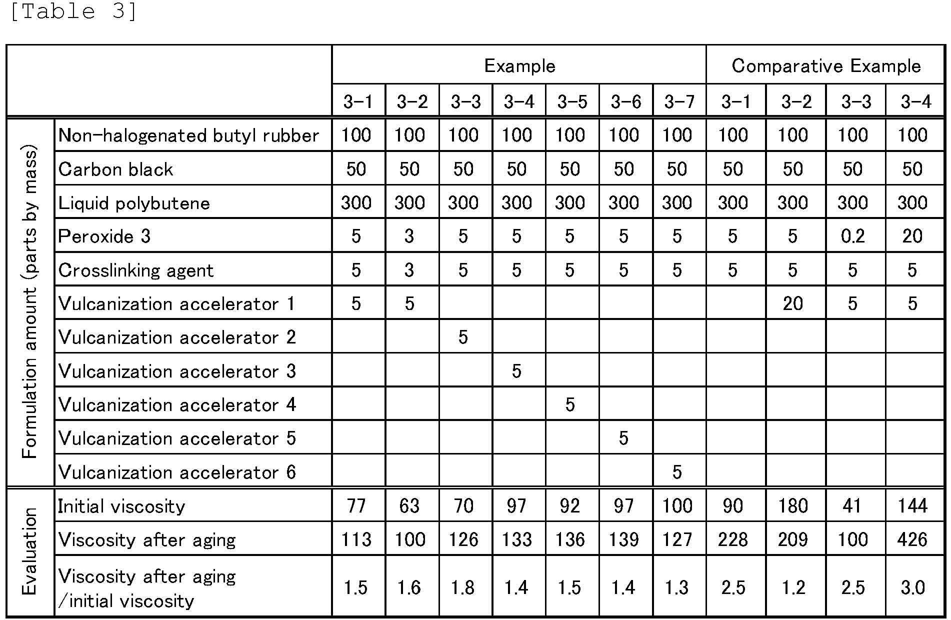

The tables show that in each of the sealant rubber compositions of the examples containing a rubber component, a specific vulcanization accelerator such as a thiazole, and a peroxide in predetermined amounts, good initial sealing performance (initial viscosity) was ensured, and only a small change in viscosity due to aging and thus a significantly reduced change in physical properties were exhibited. Moreover, self-sealing tires including a sealant layer formed by applying the sealant rubber composition of each example to a tire inner periphery corresponding to the breaker exhibited good initial sealing performance as well as only a small reduction in sealing performance after aging and thus a significantly reduced change in sealing performance.

## Claims

1. A tire inner surface sealant rubber composition, comprising:
at least one rubber component;
at least one vulcanization accelerator selected from the group consisting of thiazoles, thiurams, and dithiocarbamines;
at least one peroxide; and
at least one crosslinking agent,
the rubber composition comprising, per 100 parts by mass of the at least one rubber component, 0.5 to 10.0 parts by mass of the at least one vulcanization accelerator, 0.5 to 10.0 parts by mass of the at least one peroxide, and 0.5 to 12.0 parts by mass of the at least one crosslinking agent,
wherein the at least one crosslinking agent is a quinone dioxime compound, and
the rubber component comprises at least one butyl-based rubber.

2. The tire inner surface sealant rubber composition according to claim 1,
wherein the peroxide is at least one benzoyl peroxide.

3. A self-sealing tire, comprising
a sealant layer comprising the rubber composition according to claim 1 or 2 provided on an inner periphery of the tire.

## Patentansprüche

1. Reifeninnenflächen-Dichtmittelkautschukzusammensetzung, umfassend:
mindestens eine Kautschukkomponente;
mindestens einen Vulkanisationsbeschleuniger, ausgewählt aus der Gruppe bestehend aus Thiazolen, Thiuramen und Dithiocarbaminen;
mindestens ein Peroxid; und
mindestens ein Vernetzungsmittel,
wobei die Kautschukzusammensetzung, pro 100 Massenteile der mindestens einen Kautschukkomponente, 0,5 bis 10,0 Massenteile des mindestens einen Vulkanisationsbeschleunigers, 0,5 bis 10,0 Massenteile des mindestens einen Peroxids und 0,5 bis 12,0 Massenteile des mindestens einen Vernetzungsmittels umfasst,
wobei das mindestens eine Vernetzungsmittel eine Chinondioxim-Verbindung ist, und
die Kautschukkomponente mindestens einen butylbasierten Kautschuk umfasst.

2. Reifeninnenflächen-Dichtmittelkautschukzusammensetzung nach Anspruch 1,
wobei das Peroxid mindestens ein Benzoylperoxid ist.

3. Selbstdichtender Reifen, umfassend
eine Dichtmittelschicht, welche die an einem Innenumfang des Reifens vorgesehene Kautschukzusammensetzung nach Anspruch 1 oder 2 umfasst.

## Revendications

1. Composition de caoutchouc d'étanchéité de surface intérieure de pneumatique, comprenant :
au moins un composant de caoutchouc ;
au moins un accélérateur de vulcanisation sélectionné parmi le groupe constitué de : thiazoles, thiurames et dithiocarbamates ;
au moins un peroxyde ; et
au moins un agent de réticulation,
la composition de caoutchouc comprenant, pour 100 parts en masse dudit au moins un composant de caoutchouc, 0,5 à 10,0 parts en masse dudit au moins un accélérateur de vulcanisation, 0,5 à 10,0 parts en masse dudit au moins un peroxyde, et 0,5 à 12,0 parts en masse dudit au moins un agent de réticulation,
dans lequel ledit au moins un agent de réticulation est un composé de dioxime de quinone, et
le composant de caoutchouc comprend au moins un caoutchouc à base de butyle.

2. Composition de caoutchouc d'étanchéité de surface intérieure de pneumatique selon la revendication 1,
dans lequel le peroxyde est au moins un peroxyde de benzoyle.

3. Pneumatique auto-obturant, comprenant
une couche d'étanchéité comprenant la composition de caoutchouc selon la revendication 1 ou 2 prévue sur une périphérie intérieure du pneumatique.
